# EUROPEAN PATENT APPLICATION

(11) **EP 4 095 213 A1**
(43) Date of publication of application: **30.11.2022**
(21) Application number: 20915776.7
(22) Date of filing: 03.08.2020
(51) Int. Cl.: C09J 133/00, C08F 220/00, C08F 226/10, H01M 4/62, H01M 10/0525

(54) **BATTERY ADHESIVE, LITHIUM-ION BATTERY NEGATIVE ELECTRODE PLATE AND LITHIUM-ION BATTERY**

(30) Priority: 21.01.2020 CN 202010069004; 15.06.2020 CN 202010542779
(71) Applicant: Meishan Indigo Technology Co., Ltd., Meishan, Sichuan 620861 (CN)
(72) Inventor: PAN, Zhonglai, Chengdu, Sichuan 611436 (CN); ZHANG, Xiaozheng, Chengdu, Sichuan 611436 (CN); TAO, Wei, Chengdu, Sichuan 611436 (CN)
(74) Representative: MacLachlan & Donaldson
(86) International application number: PCT/CN2020/106529
(87) International publication number: WO 2021/147295

(57) **Abstract**

The invention relates to a battery binder, a lithium ion battery negative plate and a lithium ion battery, and belongs to the technical field of lithium ion batteries to solve a technical problem of providing a binder for the battery. The binder comprises a polymer with a hydrophilic unit and a hydrophobic unit; and in the polymer, a medium-low molecular weight polymer accounts for less than 5 wt% of the total polymer, and the molecular weight of the medium-low molecular weight polymer is less than or equal to 100,000. The binder provided by the invention is strong in adhesive force, simple in preparation method and low in cost, and not only can reflect higher adhesive force, but also can increase the proportion of the active material when the binder amount is 1.5-2% by being compared with the amount of 2.5-5% of an existing negative plate binder, so that the energy density of the battery is increased.

## Description

### Field of the Invention

The invention relates to a battery binder, a lithium ion battery negative plate and a lithium ion battery, and belongs to the technical field of lithium ion batteries.

### Background of the Invention

As the most ideal mobile power source, lithium ion batteries have incomparable advantages over other batteries, such as high energy density, small size, long life and no pollution, and are widely used in electric vehicles, aerospace, communication and various portable electrical appliances.

A lithium ion battery is mainly composed of plates (including a positive plate and a negative plate), a separator and an electrolyte, and each plate is composed of electrode active material powder, a binder, a conductive agent and a current collector. In the preparation of lithium ion battery plates, an electrode active material, a conductive agent and a binder solution are usually mixed and ground into a slurry, and then the slurry is coated on copper foil or aluminum foil as a current collector, and processed by drying, rolling and other processes. It is clear that the binder plays a key role in the preparation of the plates.

Water-based binders have become the first choice for lithium ion battery electrode binders because they are safe and pollution-free, do not require recovering solvents, and are simple to operate. At present, commonly used water-based binders are styrene butadiene rubber emulsion (SBR), LA132, LA133, and so on.

The SBR water-based binder uses water as a dispersion medium for negative active material powder, which is environment-friendly and pollution-free, and harmless to production operators. However, due to the limitation of chemical properties of material components, SBR, as the binder for negative active material powder of lithium ion batteries, cannot meet the application requirements of increasing battery quality in terms of overall battery performance.

As early studies by the inventors of this application, Chinese patent applications ZL01108511.8 and ZL01108524.X disclose binders as negative active material powder of lithium ion batteries. Lithium ion batteries made with these binders have excellent performance. However, due to limited adhesive force, the binders have slightly poor adhesive force when the dosage is low. The binders are generally used at 3-4% (based on solid). When the dosage is reduced, plates cannot meet the requirement of higher yield.

### Summary of the Invention

In view of the above defects, a technical problem to be solved by the invention is to provide a battery binder with strong adhesive force.

The battery binder provided by the invention comprises a water-based polymer with a hydrophilic unit and a hydrophobic unit; and in the polymer, a medium-low molecular weight polymer accounts for less than 5 wt% of the total polymer, and the molecular weight of the medium-low molecular weight polymer is less than or equal to 100,000.

As an implementation, the weight percentage of the hydrophilic unit and the hydrophobic unit in the polymer is 30-70%:70-30%. As a specific implementation, the weight percentage of the hydrophilic unit and the hydrophobic unit is 40-60%:60-40%.

As an implementation, the medium-low molecular weight polymer accounts for less than 2% of the total polymer. In a specific embodiment, the medium-low molecular weight polymer accounts for less than 1% of the total polymer.

As a preferred solution, a low molecular weight polymer accounts for less than 0.5 wt% of the total polymer, and the molecular weight of the low molecular weight polymer is less than or equal to 50,000.

As an implementation, the hydrophilic unit contains carboxyl or sulfonic acid groups.

As an implementation, the hydrophobic unit is introduced by a lipophilic monomer, and the hydrophilic unit is introduced by a hydrophilic monomer.

As an implementation, the lipophilic monomer has a structural formula of CH₂=CR¹R², wherein, R¹ is selected from -H or -CH₃; and R² is selected from -CN, -C₆H₅, -COOCH₃, -COOCH₂CH₃, -COOCH₂CH₂CH₂CH₃, -COOC(CH₃)₃, -COOCH₂CH(CH₂CH₃)CH₂CH₂CH₂CH₃, -COOC₁₂H₂₅, -COO(CH₂)₁₇CH₃ 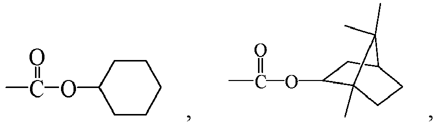 -COOCH₂CH₂OH, -COOCH₃CHCH₂OH, -COOCH₂CHOHCH₃, -OCOCH₃ or 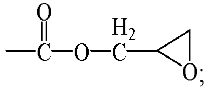 and the hydrophilic monomer has a structural formula of CHR³=CR⁴R⁵, wherein, R³ is selected from -H, -CH₃ or -COOM¹; M¹ comprises H, Li, Na, K, Ca, Zn or Mg; R⁴ is selected from -H, -CH₃ or -COOM²; M² comprises H, Li, Na, K, Ca, Zn or Mg; and R⁵ is selected from -COOM³, -CH₂COOM³, -COO(CH₂)₆SO₃M³, -CONH₂, -CONHCH₃, 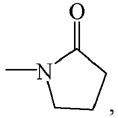 -CONHCH₂CH₃, -CON(CH₃)₂, -CON(CH₂CH₃)₂, -CH2CHCONHCH₂OH, -CH₂CHCONHCH₂CH₂OH, -CONHC(CH₃)₂CH₂SO₃H, -CH₂SO₃M or 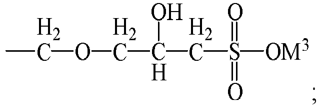 M³ comprises H, Li, Na, K, Ca, Zn or Mg.

As an implementation, R² is selected from -CN, -C₆H₅, -COOCH₃, -COOCH₂CH₃, -COOCH₂CH₂CH₂CH₃, -COOC(CH₃)₃, -COOCH₂CH(CH₂CH₃)CH₂CH₂CH₂CH₃, -COOC₁₂H₂₅, -COO(CH₂)₁₇CH₃ 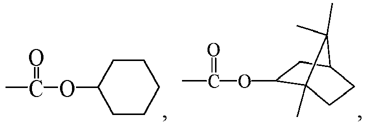 -COOCH₂CH₂OH, -OCOCH₃ or

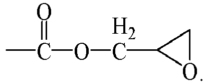

As a specific implementation, the lipophilic monomer is at least one of acrylonitrile, methacrylonitrile, styrene, methyl acrylate, ethyl acrylate, n-butyl acrylate, tert-butyl acrylate, 2-ethylhexyl acrylate, cyclohexyl acrylate, isobornyl acrylate, hydroxyethyl acrylate, hydroxypropyl acrylate, vinyl acetate, methacrylonitrile, methyl methacrylate, ethyl methacrylate, n-butyl methacrylate, 2-ethylhexyl methacrylate, cyclohexyl methacrylate, isobornyl methacrylate, hydroxyethyl methacrylate, hydroxypropyl methacrylate and epoxypropyl methacrylate; and the hydrophilic monomer comprises at least one of acrylic acid, acrylic salt, methacrylic acid, methacrylic salt, allyloxy hydroxypropyl sulfonic acid, allyloxy hydroxypropyl sulfonate, vinyl sulfonic acid, vinyl sulfonate, 2-acrylamido-2-methylpropane sulfonic acid, propene sulfonic acid, propylene sulfonate, methylpropenesulfonic acid, methacrylic acid sulfonate, N-vinylpyrrolidone, itaconic acid, itaconate, maleic acid and maleate.

Furthermore, the hydrophilic monomer further comprises at least one of acrylamide, N-methacrylamide, N-ethylacrylamide, N,N-dimethylacrylamide, N,N-diethylacrylamide, 2-methacrylamide, N-hydroxymethylacrylamide, N-hydroxyethylacrylamide and N-hydroxypropylacrylamide.

In a specific embodiment, the lipophilic monomers are acrylonitrile and butyl acrylate, and the hydrophilic monomers are acrylic acid, N-vinylpyrrolidone and acrylamide. In a specific embodiment, the lipophilic monomers are methacrylonitrile, methyl acrylate and hydroxypropyl acrylate, and the hydrophilic monomers are methacrylic acid and N-methacrylamide. In a specific embodiment, the lipophilic monomers are 2-ethylhexyl acrylate, cyclohexyl methacrylate and ethyl methacrylate, and the hydrophilic monomers are 2-acrylamido-2-methylpropane sulfonic acid, N,N-diethylacrylamide and itaconate. In a specific embodiment, the lipophilic monomers are ethyl acrylate, vinyl acetate and hydroxyethyl methacrylate, and the hydrophilic monomers are acrylic acid and its salts, 2-methacrylamide and vinyl sulfonate. In a specific embodiment, the lipophilic monomers are styrene, 2-ethylhexyl methacrylate and hydroxypropyl methacrylate, and the hydrophilic monomers are maleic acid, N-vinylpyrrolidone and N-hydroxypropylacrylamide. In a specific embodiment, the lipophilic monomers are 2-ethylhexyl acrylate, ethyl acrylate and isobornyl methacrylate, and the hydrophilic monomers are acrylic acid, methacrylic acid, N-hydroxyethylacrylamide and propene sulfonic acid.

Furthermore, the weight percentage of the hydrophilic monomer and the lipophilic monomer is 30-70%:70-30%. In some embodiments, the weight percentage of the hydrophilic monomer and the lipophilic monomer is 40-60%:60-40%.

As an implementation, the battery binder further contains a solvent, and the solvent is an organic solvent or water.

As a specific implementation, the solvent is water.

Furthermore, the pH value of the binder with water as the solvent is 6-12; and in some implementations, the pH value of the binder with water as the solvent is 6.5-9.

As an implementation, the battery binder further contains an additive, and the additive comprises at least one of dispersant, leveling and wetting agent, defoamer and flexibilizer.

The invention further provides a method for preparing the battery binder with water as the solvent.

The method for preparing the battery binder comprises the following steps: heating a hydrophilic monomer, a lipophilic monomer and water to a reaction temperature in a protective atmosphere, then adding an initiator to initiate a reaction to obtain a solid-liquid mixture, and then neutralizing a resulting precipitate to obtain the battery binder.

The invention further provides an application of the battery binder in preparing a lithium ion battery negative plate.

The invention further provides an application of the battery binder in preparing lithium ion battery plates.

The battery binder provided by the invention has high adhesive force, and can be applied to the preparation of lithium ion battery plates to improve the performance of batteries.

The invention further provides a lithium ion battery negative plate.

The lithium ion battery negative plate comprises a negative active material and a binder, where the binder is the battery binder provided by the invention.

The invention further provides a lithium ion battery.

The lithium ion battery comprises a positive electrode, a negative electrode and an electrolyte, where the negative electrode is the lithium ion battery negative plate provided by the invention.

The invention further provides a battery pack comprising a plurality of batteries provided by the invention.

Compared with the prior art, the invention has the following beneficial effects:
The binder provided by the invention is strong in adhesive force, simple in preparation method and low in cost, and not only can reflect higher adhesive force, but also can increase the proportion of the active material (negative electrode material) when the binder amount is 1.5-2% by being compared with the amount of 2.5-5% of an existing negative plate binder, so that the energy density of the battery is increased.

### Brief Description of the Drawings

Fig. 1 shows molecular weight test results of binders in Embodiment 1 and Comparative Example 1 of the invention.
Fig. 2 shows cycle performance of batteries prepared by using the binders in Embodiment 1 and Comparative Examples 1 and 2 of the invention.
Fig. 3 shows low temperature discharge results of the batteries prepared by using the binders in Embodiment 1 and Comparative Examples 1 and 2 of the invention.

### Description of the Preferred Embodiments

Existing water-based battery binders are mostly produced by direct polymerization although they are also amphiphilic copolymers containing hydrophilic units and hydrophobic units. Binder products are directly obtained after polymerization, and thus these products are aqueous emulsions or solutions. However, it is well known in the art that the presence of residual monomers after polymerization will cause environmental pollution and occupational health problems for workers in subsequent battery production. Therefore, all existing polymerization aims to completely polymerize monomers to the utmost extent. However, with the progress of polymerization, concentrations of monomers decrease after polymerization consumption. Because the length of a polymer molecular chain is proportional to the concentrations of the monomers, some medium-low molecular weight segments will inevitably be generated in later stages of the polymerization. After the polymerization, these medium-low molecular weight segments cannot be separated in industrial production and will remain in the polymer, affecting the binder performance, the bonding performance and the performance of batteries prepared by using the binder.

According to researches of the inventors of the invention, hydrophilic monomers can be present in water in the form of acids or salts depending on different pH values, but their hydrophilicity are low when they are present in the form of acids. If monomers for polymerization are copolymerized in an aqueous phase in a composition with low hydrophilicity, the resulting product will precipitate due to insufficient hydrophilicity, forming a mixture of water, residual monomers and precipitate. Termination of the polymerization at this time will greatly reduce the formation of a medium-low molecular weight polymer, and further separate the precipitate physically, leaving unreacted monomers and a small amount of medium-low molecular weight polymer in the reaction system (aqueous phase). The precipitate is a high molecular weight polymer, and the content of the medium-low molecular weight polymer in the precipitate is low. The polymer can be directly dissolved in an organic solvent such as NMP and used as a binder, or neutralized or hydrolyzed with alkali to improve the hydrophilicity of the copolymer, then the copolymer is uniformly dispersed in the aqueous phase to obtain a water-based binder.

The resulting binder has significantly improved mechanical properties such as cohesion and adhesive force due to lower content of the medium-low molecular weight polymer, so that the binder prepared by the precipitate has better bonding performance, further reducing the amount of the binder, and improving the battery performance.

Based on this, the battery binder provided by the invention comprises a polymer with a hydrophilic unit and a hydrophobic unit; and in the polymer, a medium-low molecular weight polymer accounts for less than 5 wt% of the total polymer, and the molecular weight of the medium-low molecular weight polymer is less than or equal to 100,000. When the content of the medium-low molecular weight polymer is low, the bonding performance of the binder and the performance of batteries prepared by using the binder are better.

The battery binder provided by the invention comprises a polymer with a hydrophilic unit and a hydrophobic unit; and in the polymer, a medium-low molecular weight polymer accounts for less than 5 wt% of the total polymer, and the molecular weight of the medium-low molecular weight polymer is less than or equal to 100,000.

As some implementations, the medium-low molecular weight polymer is controlled to be 0.5 wt%, 0.8 wt%, 1 wt%, 1.5 wt%, 2 wt%, 2.5 wt%, 3 wt%, 3.5 wt%, 4 wt%, 4.5 wt%, 5 wt% and so on of the total polymer.

As an implementation, the weight percentage of the hydrophilic unit and the hydrophobic unit in the polymer is 30-70%:70-30%.

As a specific embodiment, the weight percentage of the hydrophilic unit and the hydrophobic unit in the polymer is 30%:70%, 35%:65%, 40%:60%, 42%:58%, 45%:55%, 47%:53%, 50%:50%, 51%:49%, 55%:45%, 58%:42%, 60%:40%, and so on.

As an implementation, the weight percentage of the hydrophilic unit and the hydrophobic unit is 40-60%:60-40%.

In an implementation, the medium-low molecular weight polymer accounts for less than 2% of the total polymer. In a specific implementation, the medium-low molecular weight polymer accounts for less than 1% of the total polymer.

As a preferred solution, it is necessary to control the content of a low molecular weight polymer with molecular weight less than 50,000 while controlling the medium-low molecular weight polymer. As an implementation, a low molecular weight polymer accounts for less than 0.5 wt% of the total polymer, and the molecular weight of the low molecular weight polymer is less than or equal to 50,000.

As some specific implementations, the low molecular weight polymer is controlled to be 0.1 wt%, 0.2 wt%, 0.3 wt%, 0.4 wt%, 0.5 wt% and so on of the total polymer.

The molecular weight in the invention is weight-average molecular weight (Mw). The molecular weight in the invention is determined by gel chromatography. Test equipment model: Waters Alliance E2695. Test conditions: three chromatographic columns (Waters StyRagel HR 3, 4 and 5 (water)) connected in series; mobile phase Buffer pH=7.2, 3 mol/L NaCl solution; standard sodium polyacrylate PAA, CAS No. 9003-04-7, molecular weight 2800; 11500; 193800; 392600; 585400; 750000; 804700; 1310000; 2250000 (standard curves are plotted from the above 9 standard samples with different molecular weight), purchased from American Polymer Standards Corporation, at a temperature of 0.6 ml/min. The molecular weight determined by different chromatographic columns and standards will vary, with an error up to 20%.

The medium-low molecular weight polymer in the invention is a polymer with molecular weight less than or equal to 100,000.

The low molecular polymer in the invention is a polymer with molecular weight less than or equal to 50,000.

The polymer is an amphiphilic copolymer due to the presence of the hydrophobic unit and the hydrophilic unit, and the hydrophilic unit contains carboxyl or sulfonic acid groups. Preferably, the hydrophobic unit of the polymer is introduced by a lipophilic monomer, and the hydrophilic unit is introduced by a hydrophilic monomer, and the hydrophilic unit contains carboxyl or sulfonic acid groups. The amphiphilic polymer of the invention can be obtained by copolymerizing the lipophilic monomer with the hydrophilic monomer.

As some specific implementations, the lipophilic monomer has a structural formula of CH₂=CR¹R², where,
R¹ is selected from -H or -CH₃;
R² is selected from -CN, -C₆H₅, -COOCH₃, -COOCH₂CH₃, -COOCH₂CH₂CH₂CH₃, -COOC(CH₃)₃, -COOCH₂CH(CH₂CH₃)CH₂CH₂CH₂CH₃, -COOC₁₂H₂₅, -COO(CH₂)₁₇CH₃ 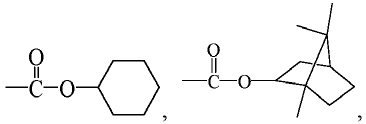 -COOCH₂CH₂OH, -COOCH₃CHCH₂OH, -COOCH₂CHOHCH₃, -OCOCH₃ or 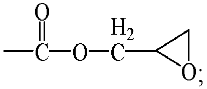 the hydrophilic monomer has a structural formula of CHR³=CR⁴R⁵, where,
R³ is selected from -H, -CH₃ or -COOM¹; M¹ comprises H, Li, Na, K, Ca, Zn or Mg;
R⁴ is selected from -H, -CH₃ or -COOM²; M² comprises H, Li, Na, K, Ca, Zn or Mg; and
R⁵ is selected from -COOM³, -CH₂COOM³, -COO(CH₂)₆SO₃M³, -CONH₂, -CONHCH₃, 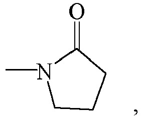 -CONHCH₂CH₃, -CON(CH₃)₂, -CON(CH₂CH₃)₂, -CH2CHCONHCH₂OH, -CH₂CHCONHCH₂CH₂OH, -CONHC(CH₃)₂CH₂SO₃H, -CH₂SO₃M or 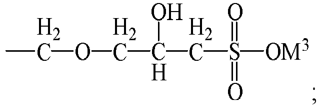 M³ comprises H, Li, Na, K, Ca, Zn or Mg.

In some embodiments, R² is selected from -CN, -C₆H₅, -COOCH₃, -COOCH₂CH₃, -COOCH₂CH₂CH₂CH₃, -COOC(CH₃)₃, -COOCH₂CH(CH₂CH₃)CH₂CH₂CH₂CH₃, -COOC₁₂H₂₅, -COO(CH₂)₁₇CH₃ 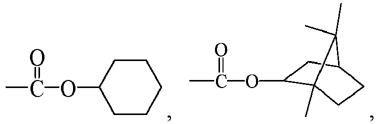 -COOCH₂CH₂OH, -OCOCH₃ or

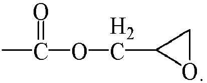

In a specific embodiment, the lipophilic monomer comprises at least one of acrylonitrile, methacrylonitrile, styrene, methyl acrylate, ethyl acrylate, n-butyl acrylate, tert-butyl acrylate, 2-ethylhexyl acrylate, cyclohexyl acrylate, isobornyl acrylate, hydroxyethyl acrylate, hydroxypropyl acrylate, vinyl acetate, methacrylonitrile, methyl methacrylate, ethyl methacrylate, n-butyl methacrylate, 2-ethylhexyl methacrylate, cyclohexyl methacrylate, isobornyl methacrylate, hydroxyethyl methacrylate, hydroxypropyl methacrylate and epoxypropyl methacrylate.

The hydrophilic monomer comprises at least one of acrylic acid, acrylic salt, methacrylic acid, methacrylic salt, allyloxy hydroxypropyl sulfonic acid, allyloxy hydroxypropyl sulfonate, vinyl sulfonic acid, vinyl sulfonate, 2-acrylamido-2-methylpropane sulfonic acid, propene sulfonic acid, propylene sulfonate, methylpropenesulfonic acid, methacrylic acid sulfonate, N-vinylpyrrolidone, itaconic acid, itaconate, maleic acid and maleate.

Because the hydrophilic unit contains carboxyl or sulfonic acid groups, it is necessary to ensure that at least one hydrophilic monomer contains carboxyl or sulfonic acid groups. The monomer containing carboxyl or sulfonic acid groups can be adjusted in terms of hydrophilicity to ensure that the polymer precipitates in water and takes the form of a salt after an alkaline solution is added, so as to improve the hydrophilicity and dissolve in water.

In a specific implementation of the invention, the hydrophilic monomer further comprises at least one of acrylamide, N-methacrylamide, N-ethylacrylamide, N,N-dimethylacrylamide, N,N-diethylacrylamide, 2-methacrylamide, N-hydroxymethylacrylamide, N-hydroxyethylacrylamide and N-hydroxypropylacrylamide. These amide-based hydrophilic monomers can be introduced to provide other functions.

The polymer in the binder of the invention is copolymerized from at least one hydrophilic monomer and at least one lipophilic monomer. As an implementation, the polymer is copolymerized from a lipophilic monomer and a hydrophilic monomer. In a specific embodiment of the invention, the lipophilic monomer is acrylonitrile, and the hydrophilic monomer is acrylic acid. In a specific embodiment, the lipophilic monomer is methacrylonitrile, and the hydrophilic monomer is methacrylic acid. In a specific embodiment, the lipophilic monomer is hydroxyethyl acrylate, and the hydrophilic monomer is vinyl sulfonate. In a specific embodiment, the lipophilic monomer is cyclohexyl methacrylate, and the hydrophilic monomer is methacrylic acid. In a specific embodiment, the lipophilic monomer is vinyl acetate, and the hydrophilic monomer is methylpropenesulfonic acid. In a specific embodiment, the lipophilic monomer is epoxypropyl methacrylate, and the hydrophilic monomer is itaconic acid. In a specific embodiment, the lipophilic monomer is 2-ethylhexyl acrylate, and the hydrophilic monomer is maleic acid. In a specific embodiment, the lipophilic monomer is hydroxyethyl methacrylate, and the hydrophilic monomer is vinyl sulfonic acid. In a specific embodiment, the lipophilic monomer is methacrylonitrile, and the hydrophilic monomer is 2-acrylamido-2-methylpropane sulfonic acid. In a specific embodiment, the lipophilic monomer is styrene, and the hydrophilic monomer is propene sulfonic acid. In a specific embodiment, the lipophilic monomer is methyl acrylate, and the hydrophilic monomer is allyloxy hydroxypropyl sulfonic acid. In a specific embodiment, the lipophilic monomer is tert-butyl acrylate, and the hydrophilic monomer is methacrylic acid sulfonate.

As another implementation, the polymer in the binder of the invention is copolymerized from a lipophilic monomer and a plurality of hydrophilic monomers. In a specific embodiment, the lipophilic monomer is acrylonitrile, and the hydrophilic monomers are acrylic acid and methacrylic acid. In a specific embodiment, the lipophilic monomer is acrylonitrile, and the hydrophilic monomers are acrylic acid and acrylamide. In a specific embodiment, the lipophilic monomer is methacrylonitrile, and the hydrophilic monomers are acrylic salt, methacrylic acid and N-methacrylamide. In a specific embodiment, the lipophilic monomer is styrene, and the hydrophilic monomers are acrylic acid, acrylic salt, methacrylic acid, methacrylic salt and acrylamide. In a specific embodiment, the lipophilic monomer is methyl acrylate, and the hydrophilic monomers are vinyl sulfonic acid, 2-acrylamido-2-methylpropane sulfonic acid and itaconic acid. In a specific embodiment, the lipophilic monomer is, and the hydrophilic monomers are. In a specific embodiment, the lipophilic monomer is n-butyl methacrylate, and the hydrophilic monomers are acrylic acid, acrylic salt and acrylamide. In a specific embodiment, the lipophilic monomer is tert-butyl acrylate, and the hydrophilic monomers are N,N-dimethylacrylamide, 2-methacrylamide and maleic acid. In a specific embodiment, the lipophilic monomer is acrylonitrile, and the hydrophilic monomers are acrylic salt, methacrylic acid, methacrylic salt, acrylamide, N-methacrylamide and N-ethyl acrylamide.

As another implementation, the polymer in the binder of the invention is copolymerized from a plurality of lipophilic monomers and a hydrophilic monomer. In a specific embodiment, the lipophilic monomers are acrylonitrile, methacrylonitrile, styrene and methyl acrylate, and the hydrophilic monomer is acrylic acid. In a specific embodiment, the lipophilic monomers are styrene, methyl acrylate, ethyl acrylate and tert-butyl acrylate, and the hydrophilic monomer is methacrylic acid. In a specific embodiment, the lipophilic monomers are vinyl acetate, methacrylonitrile, methyl methacrylate and ethyl methacrylate, and the hydrophilic monomer is allyloxy hydroxypropyl sulfonic acid. In a specific embodiment, the lipophilic monomers are cyclohexyl methacrylate, isobornyl methacrylate and epoxypropyl methacrylate, and the hydrophilic monomer is maleic acid. In a specific embodiment, the lipophilic monomers are styrene, methyl acrylate and hydroxypropyl acrylate, and the hydrophilic monomer is itaconic acid. In a specific embodiment, the lipophilic monomers are, and the hydrophilic monomer is allyloxy hydroxypropyl sulfonic acid. In a specific embodiment, the lipophilic monomers are hydroxypropyl acrylate, vinyl acetate, methacrylonitrile and methyl methacrylate, and the hydrophilic monomer is vinyl sulfonic acid. In a specific embodiment, the lipophilic monomers are styrene, methacrylonitrile, methyl methacrylate and isobornyl methacrylate, and the hydrophilic monomer is propene sulfonic acid.

As another implementation, the polymer in the binder of the invention is copolymerized from a plurality of lipophilic monomers and a plurality of hydrophilic monomers. In a specific embodiment, the lipophilic monomers are acrylonitrile and butyl acrylate, and the hydrophilic monomers are acrylic acid, N-vinylpyrrolidone and acrylamide. In a specific embodiment, the lipophilic monomers are methacrylonitrile, methyl acrylate and hydroxypropyl acrylate, and the hydrophilic monomers are methacrylic acid and N-methacrylamide. In a specific embodiment, the lipophilic monomers are 2-ethylhexyl acrylate, cyclohexyl methacrylate and ethyl methacrylate, and the hydrophilic monomers are 2-acrylamido-2-methylpropane sulfonic acid, N,N-diethylacrylamide and itaconate. In a specific embodiment, the lipophilic monomers are ethyl acrylate, vinyl acetate and hydroxyethyl methacrylate, and the hydrophilic monomers are acrylic acid and its salts, 2-methacrylamide and vinyl sulfonate. In a specific embodiment, the lipophilic monomers are styrene, 2-ethylhexyl methacrylate and hydroxypropyl methacrylate, and the hydrophilic monomers are maleic acid, N-vinylpyrrolidone and N-hydroxypropylacrylamide. In a specific embodiment, the lipophilic monomers are 2-ethylhexyl acrylate, ethyl acrylate and isobornyl methacrylate, and the hydrophilic monomers are acrylic acid, methacrylic acid, N-hydroxyethylacrylamide and propene sulfonic acid.

As an implementation, the weight percentage of the hydrophilic monomer and the lipophilic monomer is 30-70%:70-30%.As a specific implementation, the weight percentage of the hydrophilic monomer and the lipophilic monomer is 40-60%:60-40%.

As a specific implementation, the weight percentage of the hydrophilic monomer and the lipophilic monomer is 40%:60%; as another specific implementation, the weight percentage of the hydrophilic monomer and the lipophilic monomer is 45%:55%; as another specific implementation, the weight percentage of the hydrophilic monomer and the lipophilic monomer is 50%:50%; as another specific implementation, the weight percentage of the hydrophilic monomer and the lipophilic monomer is 55%:45%; as another specific implementation, the weight percentage of the hydrophilic monomer and the lipophilic monomer is 60%:40%, and so on.

The battery binder provided by the invention can be used after a solvent is added to make it into a glue, as a solid product, or used directly as a liquid product.

As an implementation, the battery binder further contains a solvent, and the solvent is an organic solvent or water.

Organic solvents commonly used in the art are applicable to the invention, such as NMP

As a preferred embodiment, the solvent is water. The binder with water as a solvent has the advantages of safety, no pollution, no solvent recovery, simple operation, and so on.

As an implementation, the binder has a pH value of 6-12. When the pH value is 6-12, the polymer is mostly in the form of ionic polymer, which can increase its hydrophilicity, so that the polymer can be well dissolved in water. The pH value can be adjusted by a conventional method. As a specific implementation, an alkaline solution is added to adjust the pH value. The alkaline solution is an alkali metal hydroxide, such as sodium hydroxide solution, potassium hydroxide solution, or an alkaline solution such as sodium carbonate, ammonia water or organic amine. In a specific embodiment, a sodium hydroxide solution is used to adjust the pH value. In a specific implementation, the pH value of the binder is 6.5-9.

As an implementation, the battery binder provided by the invention consists of a polymer and water only, with no other additives.

As another implementation, the battery binder further contains an additive, and the additive comprises at least one of dispersant, leveling and wetting agent, defoamer and flexibilizer.

The amount of these additives is conventional in the art, for example, the additive content is less than 5% of the total weight of the water-based binder. In some specific implementations, the additive content is less than 3%, less than 1%, less than 0.5%, less than 0.1%, 0% and so on of the total weight of the binder.

The dispersant can be an anionic dispersant such as oleate, sulfonate and carboxylate; or a cationic dispersant such as ammonium salt, quaternary ammonium salt and pyridine salt; or a nonionic dispersant such as polyether, alkyne diol and CMC; or a supramolecular dispersant such as phosphate polymer. With the addition of the dispersant, the dispersibility can be improved when the binder is prepared into a coating slurry.

The leveling and wetting agent can be a high boiling point solvent such as alcohol, ketone and ester, or a multi-functional high boiling point solvent mixture; or a long chain resin such as acrylic acid and fluorocarbon resin; or a silicone such as diphenyl polysiloxane and methylphenyl polysiloxane. With these leveling and wetting agents, the smoothness of the slurry can be improved for ease of use.

The defoamer can be an organic small molecule alcohol or ether, such as ethanol, isopropanol and butanol; or a silicone or a polyether, such as polydimethylsiloxane and pentaerythritol ether.

The flexibilizer is a water-soluble organic solvent with a freezing point less than 100 °C, such as ethanol, propylene glycol, butylene glycol, glycerol and dimethyl sulfoxide; or a water-based polymer or emulsion with a glass transition temperature (Tg) less than 100 °C. The flexibilizer can increase the flexibility of a binder film.

The battery binder provided by the invention can be prepared by a conventional method. As one of the implementations, hydrophilic monomers can be present in water in the form of acids or salts depending on different pH values, but their hydrophilicity are low when they are present in the form of acids. Therefore, the battery binder provided by the invention can be prepared by the following method: monomers for polymerization are copolymerized in an aqueous phase in a composition and form with low hydrophilicity, and the resulting product forms a water-dispersible slurry in the form of precipitate due to insufficient hydrophilicity of the copolymer, the precipitate can be separated physically, the copolymer precipitate is neutralized or hydrolyzed with alkali to improve the hydrophilicity of the copolymer, then the copolymer is uniformly dispersed in the aqueous phase to obtain the battery binder.

For example, during polymerization, groups such as carboxylic acid or sulfonic acid are retained in the monomers for polymerization. After polymerization, the precipitate is removed and alkali is added to neutralize the carboxylic acid or sulfonic acid in the polymer into corresponding carboxylate or sulfonate to improve its hydrophilicity, and then the polymer is dispersed in the aqueous phase.

The method can greatly reduce the content of residual monomers and low molecular weight polymer, so that the binder can meet the requirement that the medium-low molecular weight polymer is less than 5%, thereby improving mechanical properties such as cohesion and adhesive force of the copolymer.

As a specific implementation of the invention, the battery binder is prepared by the following method: adding a hydrophilic monomer, a lipophilic monomer and water to a reactor, heating to a reaction temperature in a protective atmosphere, then adding an initiator to initiate a reaction to obtain a solid-liquid mixture after the reaction, and neutralizing a resulting precipitate with an alkaline solution to pH 6-12 to obtain the battery binder, which is a transparent viscous liquid; and drying the binder to remove moisture to obtain a solid binder product.

The reaction temperature can be selected depending on types of the polymerization monomers, and can be determined by those skilled in the art by monomer type, initiator type, process conditions, and so on.

If an additive is required in the binder, the additive can be added during a synthesis process, during or after neutralization with an alkaline solution.

The protective atmosphere described in the invention is an atmosphere that is not involved in the reaction, such as nitrogen, helium, neon, argon, krypton or xenon.

The battery binder provided by the invention can be used in the preparation of batteries and plays a bonding role, for example, in the preparation of negative plates, positive plates or separators. As one of the technical solutions, the battery binder is used to prepare lithium ion battery plates, and can improve battery performance due to its high adhesive force.

The invention further provides a lithium ion battery negative plate.

The lithium ion battery negative plate comprises a negative active material and a binder, where the binder is the battery binder provided by the invention.

The negative plate can be obtained by coating a negative coating slurry on a current collector and drying, where the negative coating slurry comprises a negative active material, a conductive agent, a binder, a solvent and the like.

When the amount of the binder in the negative electrode is less than or equal to 2%, the 90° peel adhesion of the negative coating is greater than or equal to 160 N/m; preferably 160-220 N/m; and more preferably 180-200 N/m. The amount of the binder described in the invention refers to the ratio of the solid component content of the binder to the weight of the negative electrode material and the conductive agent material in the negative electrode, and the negative electrode material is other components except the solvent in the negative coating slurry, including the negative active material, the conductive agent, the binder and the like.

Refer to ASTM D3330 for the test method for 90° peel adhesion in the invention.

The invention further provides a lithium ion battery.

The lithium ion battery comprises a positive electrode, a negative electrode and an electrolyte, where the negative electrode is the lithium ion battery negative plate provided by the invention.

The invention further provides a battery pack comprising a plurality of batteries provided by the invention. The battery pack may include a battery module composed of a plurality of batteries. The batteries can be connected in series or in parallel. In particular, the batteries are connected in series.

The specific implementations of the invention will be further described in combination with embodiments, but the invention is not limited thereto.

### Embodiment 1

In the embodiment, hydrophilic monomers (acrylic acid (AA), N-vinylpyrrolidone (NVP) and acrylamide (AM)) and lipophilic monomers (acrylonitrile (AN) and butyl acrylate (BA)) are copolymerized in an aqueous phase to prepare a water-based binder for lithium ion batteries.

A method for preparing the water-based binder comprises the following steps: adding 5 parts of acrylamide, 8 parts of N-vinylpyrrolidone and 566 parts of distilled water to a reactor, stirring for dissolution at a speed of 300 r/min; introducing nitrogen to displace oxygen for 30 min; heating to 70 °C, then adding 38 parts of acrylic acid, 45 parts of acrylonitrile and 4 parts of butyl acrylate until the temperature is kept at 70 °C; then adding 0.05 part of ammonium persulfate to initiate a reaction, removing a precipitate after reaction for 9 h, and adding an alkaline solution to neutralize the pH to 6.5-9 to obtain the transparent water-based binder for lithium ion batteries.

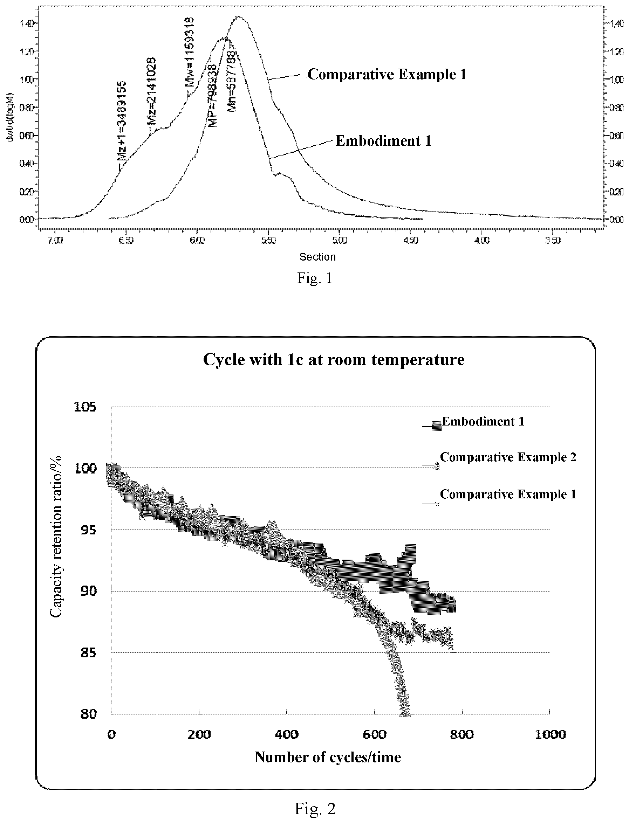

The molecular weight and molecular weight distribution of the water-based binder for lithium ion batteries are determined by gel chromatography (GPC). Test equipment model: Waters Alliance E2695. Test conditions: three chromatographic columns (Waters StyRagel HR 3, 4 and 5 (water)) connected in series; mobile phase Buffer PH=7.2, 3M NaCl, standard PAA, at a temperature of 0.6 ml/min. Test results are shown in Fig. 1. It is found that small molecules with molecular weight less than 50,000 account for 0.2 wt%, low molecules with molecular weight less than 100,000 account for 0.8 wt%, and high molecules with molecular weight more than 500,000 account for 73 wt%.

### Embodiment 2

In the embodiment, hydrophilic monomers (methacrylic acid and N-methacrylamide) and lipophilic monomers (methacrylonitrile, methyl acrylate and hydroxypropyl acrylate) are copolymerized in an aqueous phase to prepare a water-based binder for lithium ion batteries.

A method for preparing the water-based binder comprises the following steps: adding 7 parts of N-methacrylamide and 400 parts of distilled water to a reactor, and stirring for dissolution; then introducing nitrogen to displace oxygen for 30 min; heating to 65 °C, then adding 23 parts of methacrylic acid, 18 parts of methyl acrylate, 31 parts of hydroxypropyl acrylate and 21 parts of methacrylonitrile until the temperature rises to 65 °C; then adding an ammonium persulfate initiator to initiate a reaction, removing a precipitate after reaction for 22 h, and adding an alkaline solution to neutralize the pH to 6.5-9 to prepare the water-based binder for lithium ion batteries.

The molecular weight and molecular weight distribution are determined by the method in Embodiment 1. It is found that small molecules with molecular weight less than 50,000 account for 0.4 wt%, low molecules with molecular weight less than 100,000 account for 5 wt%, and high molecules with molecular weight more than 500,000 account for 60 wt%.

### Embodiment 3

In the embodiment, hydrophilic monomers (2-acrylamido-2-methylpropane sulfonic acid, N,N-diethylacrylamide and itaconate) and lipophilic monomers (2-ethylhexyl acrylate, cyclohexyl methacrylate and ethyl methacrylate) are copolymerized in an aqueous phase to prepare a water-based binder for lithium ion batteries.

A method for preparing the water-based binder comprises the following steps: adding 18 parts of 2-acrylamido-2-methylpropane sulfonic acid, 22 parts of N,N-diethylacrylamide, 5 parts of itaconate and 400 parts of distilled water to a reactor, and stirring for dissolution; then adding 20 parts of 2-ethylhexyl acrylate, 12 parts of cyclohexyl methacrylate and 22 parts of ethyl methacrylate, and introducing nitrogen to displace oxygen for 30 min; heating to 75 °C, then adding a potassium persulfate initiator to initiate a reaction, removing a precipitate after reaction for 18 h, and adding an alkaline solution to neutralize the pH to 6.5-9 to prepare the water-based binder for lithium ion batteries.

The molecular weight and molecular weight distribution are determined by the method in Embodiment 1. It is found that small molecules with molecular weight less than 50,000 account for 0.2 wt%, low molecules with molecular weight less than 100,000 account for 2 wt%, and high molecules with molecular weight more than 500,000 account for 61 wt%.

### Embodiment 4

In the embodiment, hydrophilic monomers (acrylic acid and its salts, 2-methacrylamide and vinyl sulfonate) and lipophilic monomers (ethyl acrylate, vinyl acetate and hydroxyethyl methacrylate) are copolymerized in an aqueous phase to prepare a water-based binder for lithium ion batteries.

A method for preparing the water-based binder comprises the following steps: adding 31 parts of acrylic acid and its salts, 12 parts of 2-methacrylamide, 12 parts of vinyl sulfonate and 400 parts of distilled water to a reactor, and stirring for dissolution; then adding 31 parts of ethyl acrylate, 9 parts of vinyl acetate and 5 parts of hydroxyethyl methacrylate, and introducing nitrogen to displace oxygen for 30 min; heating to 60 °C, then adding an ammonium persulfate initiator to initiate a reaction, removing a precipitate after reaction for 20 h, and adding an alkaline solution to neutralize the pH to 6.5-9 to prepare the water-based binder for lithium ion batteries.

The molecular weight and molecular weight distribution are determined by the method in Embodiment 1. It is found that small molecules with molecular weight less than 50,000 account for 0.5 wt%, low molecules with molecular weight less than 100,000 account for 1 wt%, and high molecules with molecular weight more than 500,000 account for 70 wt%.

### Embodiment 5

In the embodiment, hydrophilic monomers (maleic acid, N-vinylpyrrolidone and N-hydroxypropylacrylamide) and lipophilic monomers (styrene, 2-ethylhexyl methacrylate and hydroxypropyl methacrylate) are copolymerized in an aqueous phase to prepare a water-based binder for lithium ion batteries.

A method for preparing the water-based binder comprises the following steps: adding 3 parts of N-hydroxypropylacrylamide and 400 parts of distilled water to a reactor, and stirring for dissolution; then adding 31 parts of maleic acid and 10 parts of propene sulfonic acid, 18 parts of N-vinylpyrrolidone, 13 parts of styrene, 12 parts of 2-ethylhexyl methacrylate and 13 parts of hydroxypropyl methacrylate, and introducing nitrogen to displace oxygen for 30 min; heating to 55 °C, then adding a potassium persulfate initiator to initiate a reaction, removing a precipitate after reaction for 25 h, and adding an alkaline solution to neutralize the pH to 6.5-9 to prepare the water-based binder for lithium ion batteries.

The molecular weight and molecular weight distribution are determined by the method in Embodiment 1. It is found that small molecules with molecular weight less than 50,000 account for 0.6 wt%, low molecules with molecular weight less than 100,000 account for 1.4 wt%, and high molecules with molecular weight more than 500,000 account for 65 wt%.

### Embodiment 6

In the embodiment, hydrophilic monomers (acrylic acid, methacrylic acid, N-hydroxyethylacrylamide and propene sulfonic acid) and lipophilic monomers (2-ethylhexyl acrylate, ethyl acrylate and isobornyl methacrylate) are copolymerized in an aqueous phase to prepare a water-based binder for lithium ion batteries.

A method for preparing the water-based binder comprises the following steps: adding 8 parts of N-hydroxyethylacrylamide, 9 parts of propene sulfonic acid and 400 parts of distilled water to a reactor, and stirring for dissolution; then adding 13 parts of acrylic acid, 15 parts of methacrylic acid, 30 parts of 2-ethylhexyl acrylate, 15 parts of ethyl acrylate and 10 parts of isobornyl methacrylate, and introducing nitrogen to displace oxygen for 30 min; heating to 67 °C, then adding a ammonium persulfate initiator to initiate a reaction, removing a precipitate after reaction for 23 h, and adding an alkaline solution to neutralize the pH to 6.5-9 to prepare the water-based binder for lithium ion batteries.

The molecular weight and molecular weight distribution are determined by the method in Embodiment 1. It is found that small molecules with molecular weight less than 50,000 account for 0.2 wt%, low molecules with molecular weight less than 100,000 account for 4.5 wt%, and high molecules with molecular weight more than 500,000 account for 63 wt%.

### Embodiment 7

In the embodiment, hydrophilic monomers (28 parts of 2-acrylamido-2-methylpropane sulfonic acid, 32 parts of N,N-diethylacrylamide and 10 parts of itaconate) and lipophilic monomers (10 parts of 2-ethylhexyl acrylate, 12 parts of cyclohexyl methacrylate and 8 parts of ethyl methacrylate) are copolymerized in an aqueous phase to prepare a water-based binder for lithium ion batteries.

A method for preparing the water-based binder comprises the following steps: adding 28 parts of 2-acrylamido-2-methylpropane sulfonic acid, 32 parts of N,N-diethylacrylamide, 10 parts of itaconate and 400 parts of distilled water to a reactor, and stirring for dissolution; then adding 10 parts of 2-ethylhexyl acrylate, 12 parts of cyclohexyl methacrylate and 8 parts of ethyl methacrylate, and introducing nitrogen to displace oxygen for 30 min; heating to 73 °C, then adding an ammonium persulfate initiator to initiate a reaction, removing a precipitate after reaction for 19 h, and adding an alkaline solution to neutralize the pH to 6.5-9 to prepare the water-based binder for lithium ion batteries.

The molecular weight and molecular weight distribution are determined by the method in Embodiment 1. It is found that small molecules with molecular weight less than 50,000 account for 0.3 wt%, low molecules with molecular weight less than 100,000 account for 3.3 wt%, and high molecules with molecular weight more than 500,000 account for 66 wt%.

### Comparative Example 1

In the comparative example, hydrophilic monomers (acrylic acid (AA), N-vinylpyrrolidone (NVP) and acrylamide (AM)) and lipophilic monomers (acrylonitrile (AN) and butyl acrylate (BA)) are copolymerized in an aqueous phase to prepare a water-based binder for lithium ion batteries.

A method for preparing the water-based binder comprises the following steps: adding 5 parts of acrylamide, 8 parts of N-vinylpyrrolidone and 566 parts of distilled water to a reactor, stirring for dissolution at a speed of 300 r/min; adding 38 parts of acrylic acid, adding an alkaline solution to adjust the pH, and then introducing nitrogen to displace oxygen for 30 min; heating to 70 °C, then adding 45 parts of acrylonitrile and 4 parts of butyl acrylate until the temperature is kept at 70 °C; then adding 0.21 part of ammonium persulfate to initiate a reaction, adding 0.21 part of ammonium persulfate every 3 h to promote conversion, and adding an alkaline solution to neutralize the pH to 6.5-9 after reaction for 24 h to obtain the water-based binder for lithium ion batteries.

The molecular weight and molecular weight distribution are determined by the method in Embodiment 1, and results are shown in Fig. 1. It is found that small molecules with molecular weight less than 50,000 account for 5 wt%, low molecules with molecular weight less than 100,000 account for 10 wt%, and high molecules with molecular weight more than 500,000 account for 39%.

### Comparative Example 2

The binder in Comparative Example 2 is composed of sodium carboxymethyl cellulose (CMC) and styrene butadiene rubber (SBR) at a ratio of CMC:SBR = 1:2 (based on solid weight).

### Comparative Example 3

The binder in Comparative Example 3 is a product prepared in Embodiment 4 of patent ZL01108511.8.

### Comparative Example 4

In the comparative example, hydrophilic monomers (acrylic acid, N-vinylpyrrolidone and N-hydroxyethylacrylamide) and lipophilic monomers (acrylonitrile and hydroxypropyl acrylate) are copolymerized in an aqueous phase to prepare a water-based binder for lithium ion batteries.

A method for preparing the water-based binder comprises the following steps: adding 22 parts of N-hydroxyethylacrylamide and 300 parts of distilled water to a reactor, and stirring for dissolution; adding 30 parts of acrylic acid and 15 parts of N-vinylpyrrolidone, and then introducing nitrogen to displace oxygen for a certain time; heating to 66 °C, then adding 25 parts of acrylonitrile and 8 parts of hydroxypropyl acrylate; then adding a certain amount of potassium persulfate to initiate a reaction, removing a precipitate after reaction for 13 h, and adding an alkaline solution to neutralize the pH to 6.5-9 to prepare the water-based binder for lithium ion batteries.

The molecular weight and molecular weight distribution are determined by the method in Embodiment 1. It is found that small molecules with molecular weight less than 50,000 account for 3.1 wt%, low molecules with molecular weight less than 100,000 account for 8.4 wt%, and high molecules with molecular weight more than 500,000 account for 48 wt%.

### Comparative Example 5

In the comparative example, hydrophilic monomers (2-acrylamido-2-methylpropane sulfonic acid and acrylic acid) and lipophilic monomers (2-ethylhexyl acrylate and cyclohexyl methacrylate) are copolymerized in an aqueous phase to prepare a water-based binder for lithium ion batteries.

A method for preparing the water-based binder comprises the following steps: adding 150 parts of distilled water, 15 parts of 2-acrylamido-2-methylpropane sulfonic acid and 5 parts of acrylic acid to a reactor, and adding an alkaline solution to adjust the pH; then adding 50 parts of 2-ethylhexyl acrylate and 30 parts of cyclohexyl methacrylate, and introducing nitrogen to displace oxygen for a certain time; heating to 75 °C, and then adding a certain amount of ammonium persulfate to initiate a reaction to obtain the water-based binder for lithium ion batteries after reaction for 17 h.

The binder is an emulsion, which needs to be used with CMC and has performance similar to SBR.

### Test Example 1 Determination of 90° peel adhesion

A negative plate is prepared by using the binders in the embodiments and comparative examples, and 90° peel adhesion of the negative plate is measured by the following method, with results shown as follows:
A negative slurry mixture is prepared by adding artificial graphite (a 8C product from Jiangxi Zichen Technology Co., Ltd) used as a negative active material, binders (the binders in Embodiments 1 to 7 and Comparative Examples 1 to 6) and conductive carbon black (super-p) to deionized water at a ratio given in Table 1. The negative slurry mixture is coated onto a 12 µm thick copper (Cu) foil current collector, then dried and rolled to form a negative plate with a surface density of 20 mg/cm² and a compaction density of 1.65 g/cm³.

**Table 1**

| Item/material | Negative active material (%) | Conductive carbon black (%) | Binder (%) |
|---|---|---|---|
| Embodiments 1 to 7 | 96 | 2 | 2 |
| Comparative Example 1 | 96 | 2 | 2 |
| Comparative Examples 2, 5 | 95 | 2 | 3 |
| Comparative Examples 3, 4 | 96 | 2 | 2 |

| | | | |
|---|---|---|---|
| Note: The above percentage is the weight percentage of various solid components. | | | |

Adhesion test for plates: refer to ASTM-D3330 test method for the specific method, equipment and tools: YISIDA mechanical tester (DS2-50N); 3M tape: (Scotch 600/25 mm wide). See Table 2 for specific results.

**Table 2**

| Number of embodiment/compar ative example | Molecular weight distribution (percentage of different molecular weight, wt%) | | | 90° peel adhesion/N/m | |
|---|---|---|---|---|---|
| | Less than 5w | Less than 10w | More than 50w | Compacti on | 1.63/g.cm⁻³ |
| Embodiment 1 | 0.2 | 0.8 | 73 | 188 | |
| Embodiment 2 | 0.4 | 5 | 60 | 151 | |
| Embodiment 3 | 0.2 | 2 | 61 | 164 | |
| Embodiment 4 | 0.5 | 1 | 70 | 176 | |
| Embodiment 5 | 0.6 | 1.4 | 65 | 158 | |
| Embodiment 6 | 0.2 | 4.5 | 63 | 151 | |
| Embodiment 7 | 0.3 | 3.3 | 66 | 149 | |
| Comparative Example 1 | 5 | 10 | 39 | 107.2 | |
| Comparative Example 2 | - | - | - | 151.2 | |
| Comparative Example 3 | - | - | - | 87.4 | |
| Comparative Example 4 | 3.1 | 8.4 | 48 | 146.4 | |
| Comparative Example 5 | - | - | - | 142.1 | |

### Test Example 2 Battery performance test

A battery is prepared by using the binders in Embodiments 1, 2 and 4 and Comparative Examples 1, 2 and 3, and performance of the battery is measured:
1. Preparation of negative plate
   The negative plate is prepared by the same method as that in Test Example 1.
2. Preparation of positive plate

A positive slurry mixture is prepared by adding 94% (weight percentage) of lithium cobalt oxide used as a positive active material, 2% of carbon black (super-p) used as a conductive material and 4% of polyvinylidene fluoride (PVdF) used as a binder to N-methyl-2-pyrrolidone (NMP) solvent. The positive slurry mixture is coated onto a 18 µm thick aluminum foil current collector, then dried and rolled to form a positive plate with a surface density of 39 mg/cm² and a compaction density of 4.1 g/cm³.

### 3. Battery winding and electrolyte injection

A battery with a specification of 406379 is prepared by using the prepared electrodes and the separator. The battery is made by winding the positive electrode, the separator and the negative electrode, and the battery is packaged with an aluminum-plastic composite. An electrolyte (ethylene carbonate (EC)/ethyl methyl carbonate (EMC) = 1/2 (volume ratio)) in which 1 mol/L of lithium hexafluorophosphate (LiPF6) is dissolved is injected into the assembled battery, then the assembled battery is vacuumized and sealed to obtain a battery ready to enter an activated state.

### 4. Battery formation

The obtained cells are allowed to stand at 45 °C for 20 h, and then hot-pressed at 95 °C for 1 min for shaping. The cells are directly placed on formation equipment without clamping for formation at 30±2 °C for 100 min with a formation current of 1C ("C" is the theoretical cell capacity) and a formation cut-off potential of 4.35 V. Then the cells are placed in a charge-discharge tester for charging/discharging/charging successively with a cut-off potential of 3.8 V. Then the cells are degassed and air pockets are cut off to obtain batteries. In this process, only 8 min of hot and cold pressing is needed, and no other fixture is required to clamp each battery for formation. The total formation and capacity grading time is 270 min.

### 5. Battery performance test

### 5.1. Cycle performance

The batteries are charged to 4.35 V with a 1C current, and kept at a constant voltage of 4.35 V; then the batteries are discharged with a 1C current and a cut-off voltage of 3.0 V to complete a cycle. Test results are shown in Fig. 2.

It is clear from Fig. 2 that the product in Embodiment 1 of the invention has better cycle performance.

### 5.2. Low temperature discharge test

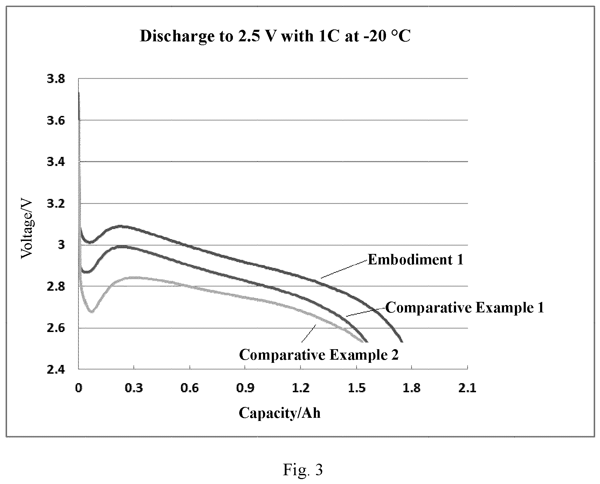

At room temperature, the cells are charged to 4.35 V with a 0.2C current, and kept at a constant voltage of 4.35 V; then the cells are placed at different temperatures for 16 h, and discharged at the corresponding temperature with a 1.0C current and a cut-off voltage of 3.0 V. See Fig. 3 and Table 3 for details.

**Table 3**

| Number of embodiment/compar ative example | Low temperature (-20 °C/1C) | | Cycles (800) |
|---|---|---|---|
| | Capacity Ah | Mean voltage V | Retention ratio % |
| Embodiment 1 | 1.78 | 2.95 | 88.68 |
| Embodiment 2 | 1.64 | 2.9 | 86.37 |
| Embodiment 4 | 1.77 | 2.96 | 87.92 |
| Comparative Example 1 | 1.56 | 2.85 | 85.58 |
| Comparative Example 2 | 1.56 | 2.77 | 80.02 (after 600 cycles) |
| Comparative Example 3 | 1.65 | 2.76 | 81.16 |

It is clear from the above battery performance test results that the battery prepared by using the binder provided by the invention has better performance.

## Claims

1. A battery binder, **characterized by** comprising a polymer with a hydrophilic unit and a hydrophobic unit; and in the polymer, a medium-low molecular weight polymer accounting for less than 5 wt% of the total polymer, and the molecular weight of the medium-low molecular weight polymer being less than or equal to 100,000.

2. The battery binder according to claim 1, wherein the weight percentage of the hydrophilic unit and the hydrophobic unit in the polymer is 30-70%:70-30%; and preferably 40-60%:60-40%.

3. The battery binder according to claim 1 or 2, wherein the medium-low molecular weight polymer accounts for less than 2 wt% of the total polymer; and preferably less than 1 wt% of the total polymer.

4. The battery binder according to any of claims 1 to 3, wherein a low molecular weight polymer accounts for less than 0.5 wt% of the total polymer, and the molecular weight of the low molecular weight polymer is less than or equal to 50,000.

5. The battery binder according to any of claims 1 to 4, wherein the hydrophilic unit contains carboxyl or sulfonic acid groups.

6. The battery binder according to any of claims 1 to 5, wherein the hydrophobic unit is introduced by a lipophilic monomer, and the hydrophilic unit is introduced by a hydrophilic monomer.

7. The battery binder according to claim 6, wherein:
the lipophilic monomer has a structural formula of CH₂=CR¹R², wherein,
R¹ is selected from -H or -CH₃;
R² is selected from -CN, -C₆H₅, -COOCH₃, -COOCH₂CH₃, -COOCH₂CH₂CH₂CH₃, -COOC(CH₃)₃, -COOCH₂CH(CH₂CH₃)CH₂CH₂CH₂CH₃, -COOC₁₂H₂₅, -COO(CH₂)₁₇CH₃ 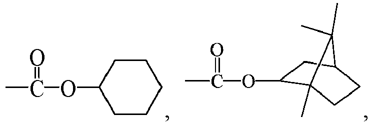 -COOCH₂CH₂OH, -COOCH₃CHCH₂OH, -COOCH₂CHOHCH₃, -OCOCH₃ or 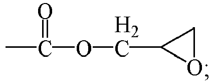 the hydrophilic monomer has a structural formula of CHR³=CR⁴R⁵, wherein,
R³ is selected from -H, -CH₃ or -COOM¹; M¹ comprises H, Li, Na, K, Ca, Zn or Mg;
R⁴ is selected from -H, -CH₃ or -COOM²; M² comprises H, Li, Na, K, Ca, Zn or Mg; and
R⁵ is selected from -COOM³, -CH₂COOM³, -COO(CH₂)₆SO₃M³, -CONH₂, -CONHCH₃, 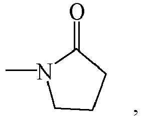 -CONHCH₂CH₃, -CON(CH₃)₂, -CON(CH₂CH₃)₂, -CH2CHCONHCH₂OH, -CH₂CHCONHCH₂CH₂OH, -CONHC(CH₃)₂CH₂SO₃H, -CH₂SO₃M or 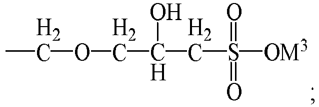 M³ comprises H, Li, Na, K, Ca, Zn or Mg.

8. The battery binder according to claim 7, wherein:
R² is selected from -CN, -C₆H₅, -COOCH₃, -COOCH₂CH₃, -COOCH₂CH₂CH₂CH₃, -COOC(CH₃)₃, -COOCH₂CH(CH₂CH₃)CH₂CH₂CH₂CH₃, -COOC₁₂H₂₅, -COO(CH₂)₁₇CH₃ 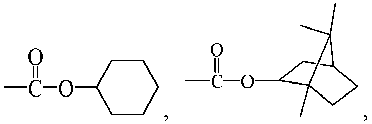 -COOCH₂CH₂OH, -OCOCH₃ or

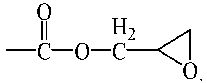

9. The battery binder according to claim 7, wherein the lipophilic monomer comprises at least one of acrylonitrile, methacrylonitrile, styrene, methyl acrylate, ethyl acrylate, n-butyl acrylate, tert-butyl acrylate, 2-ethylhexyl acrylate, cyclohexyl acrylate, isobornyl acrylate, hydroxyethyl acrylate, hydroxypropyl acrylate, vinyl acetate, methyl methacrylate, ethyl methacrylate, n-butyl methacrylate, 2-ethylhexyl methacrylate, cyclohexyl methacrylate, isobornyl methacrylate, hydroxyethyl methacrylate, hydroxypropyl methacrylate and epoxypropyl methacrylate; and
the hydrophilic monomer comprises at least one of acrylic acid, acrylic salt, methacrylic acid, methacrylic salt, allyloxy hydroxypropyl sulfonic acid, allyloxy hydroxypropyl sulfonate, vinyl sulfonic acid, vinyl sulfonate, 2-acrylamido-2-methylpropane sulfonic acid, propene sulfonic acid, propylene sulfonate, methylpropenesulfonic acid, methacrylic acid sulfonate, N-vinylpyrrolidone, itaconic acid, itaconate, maleic acid and maleate.

10. The battery binder according to claim 9, wherein the hydrophilic monomer further comprises at least one of acrylamide, N-methacrylamide, N-ethylacrylamide, N,N-dimethylacrylamide, N,N-diethylacrylamide, 2-methacrylamide, N-hydroxymethylacrylamide, N-hydroxyethylacrylamide and N-hydroxypropylacrylamide.

11. The battery binder according to claim 8, wherein the lipophilic monomer is acrylonitrile and butyl acrylate, and the hydrophilic monomer is acrylic acid, N-vinylpyrrolidone and acrylamide;
or the lipophilic monomer is methacrylonitrile, methyl acrylate and hydroxypropyl acrylate, and the hydrophilic monomer is methacrylic acid and N-methacrylamide;
or the lipophilic monomer is 2-ethylhexyl acrylate, cyclohexyl methacrylate and ethyl methacrylate, and the hydrophilic monomer is 2-acrylamido-2-methylpropane sulfonic acid, N,N-diethylacrylamide and itaconate;
or the lipophilic monomer is ethyl acrylate, vinyl acetate and hydroxyethyl methacrylate, and the hydrophilic monomer is acrylic acid and its salts, 2-methacrylamide and vinyl sulfonate;
or the lipophilic monomer is styrene, 2-ethylhexyl methacrylate and hydroxypropyl methacrylate, and the hydrophilic monomer is maleic acid, N-vinylpyrrolidone and N-hydroxypropylacrylamide;
or the lipophilic monomer is 2-ethylhexyl acrylate, ethyl acrylate and isobornyl methacrylate, and the hydrophilic monomer is acrylic acid, methacrylic acid, N-hydroxyethylacrylamide and propene sulfonic acid.

12. The battery binder according to any of claims 1 to 11, wherein the weight percentage of the hydrophilic monomer and the lipophilic monomer is 30-70%:70-30%; and preferably 40-60%:60-40%.

13. The battery binder according to any of claims 1 to 12, wherein the battery binder further contains a solvent, and the solvent is an organic solvent or water.

14. The battery binder according to claim 13, wherein the solvent is water.

15. The battery binder according to claim 14, wherein the pH value is 6-12, and preferably 6.5-9.

16. The battery binder according to any of claims 13 to 15, wherein the battery binder further contains an additive, and the additive comprises at least one of dispersant, leveling and wetting agent, defoamer and flexibilizer.

17. A method for preparing the battery binder according to claim 16, **characterized by** comprising the following steps: heating a hydrophilic monomer, a lipophilic monomer and water to a reaction temperature in a protective atmosphere, then adding an initiator to initiate a reaction to obtain a solid-liquid mixture, and then neutralizing a resulting precipitate to obtain a water-based binder.

18. An application of the battery binder according to any of claims 1 to 17 in preparing lithium ion battery plates.

19. A lithium ion battery negative plate, comprising a negative active material and a binder, wherein the binder is the battery binder according to any of claims 1 to 17.

20. A lithium ion battery, comprising a positive electrode, a negative electrode and an electrolyte, wherein the negative electrode is the lithium ion battery negative plate according to claim 19.

21. A battery pack, comprising a plurality of batteries, wherein the batteries are the lithium ion battery according to claim 20.
